(19) **Europäisches Patentamt / European Patent Office / Office européen des brevets**

(11) **EP 3 239 903 B1**

(12) **EUROPÄISCHE PATENTSCHRIFT**

(45) Veröffentlichungstag und Bekanntmachung des Hinweises auf die Patenterteilung:
**11.06.2025   Patentblatt 2025/24**

(21) Anmeldenummer: **17165868.5**

(22) Anmeldetag: **11.04.2017**

(51) Internationale Patentklassifikation (IPC):
**G06F 18/22** (2023.01)        **G06F 16/29** (2019.01)

(52) Gemeinsame Patentklassifikation (CPC):
**G06F 16/29; G06F 18/22;** G06V 10/757

(54) **VERFAHREN UND VORRICHTUNG ZUM VERGLEICHEN ZWEIER KARTEN MIT DARIN HINTERLEGTEN LANDMARKEN**

METHOD AND DEVICE FOR COMPARING TWO CARDS WITH LANDMARKS STORED IN THESE CARDS

PROCÉDÉ ET DISPOSITIF DE COMPARAISON DE DEUX CARTES COMPRENANT DES AMERS ENREGISTRÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2016   DE 102016207089**

(43) Veröffentlichungstag der Anmeldung:
**01.11.2017   Patentblatt 2017/44**

(73) Patentinhaber: **VOLKSWAGEN AKTIENGESELLSCHAFT**
**38440 Wolfsburg (DE)**

(72) Erfinder: **Stess, Marek**
**30952 Ronnenberg (DE)**

(56) Entgegenhaltungen:
• **MARIA ANTONIA BROVELLI ET AL: "Towards an Automated Comparison of OpenStreetMap with Authoritative Road Datasets : Towards an Automated Comparison of OpenStreetMap with Authoritative Road Datasets", TRANSACTIONS IN GIS, vol. 21, no. 2, 10 March 2016 (2016-03-10), GB, pages 191 - 206, XP055409306, ISSN: 1361-1682, DOI: 10.1111/tgis.12182**

• **ANONYMOUS: "Error, Accuracy, and Precision", 8 April 2002 (2002-04-08), XP055409299, Retrieved from the Internet <URL:http://www.colorado.edu/geography/gcraft/notes/error/error.bak24> [retrieved on 20170922]**

• **KHAGENDRA THAPA: "Accuracy of spatial data used in geographic information systems", PHOTOGRAMMETRIC ENGINEERING AND REMOTE SENSING, June 1992 (1992-06-01), pages 835, XP055409154, Retrieved from the Internet <URL:https://www.asprs.org/wp-content/uploads/pers/1992journal/jun/1992_jun_835-841.pdf> [retrieved on 20170922]**

**Beschreibung**

Die Erfindung betrifft ein Verfahren und eine Vorrichtung zum Vergleichen zweier Karten mit darin hinterlegten Landmarken. Insbesondere betrifft die Erfindung das Vergleichen von Landmarkenkarten, welche zur Ortung mittels darin hinterlegter Landmarken verwendet werden.

Für die Navigation in einem Umfeld, insbesondere bei automatisierten Fahrten von Fahrzeugen und anderen Transportmitteln, wird eine Karte benötigt, in der Landmarken als Ortungsmerkmale enthalten sind. Anhand dieser Landmarken können beispielsweise ein Standpunkt und eine Orientierung bestimmt werden. In der Regel werden solche Karten von einer externen Quelle bereitgestellt. Eine externe Quelle kann beispielsweise ein auf die Kartenerstellung spezialisiertes Unternehmen oder entsprechender Dienst sein. Zur Gewährleistung einer präzise Lokalisierung ist es in Bezug auf diese bereitgestellten Karten wichtig, festzustellen, ob eine bereitgestellte Karte vorgegebenen Qualitätsansprüchen, beispielsweise für das Durchführen einer automatisierten Fahrt in dem durch die bereitgestellte Karte beschriebenen Umfeld, genügt.

Aus dem Fachartikel von Maria Antonia Brovelli et al.: "Towards an Automated Comparison of OpenStreetMap with Authoritative Road Datasets", Transactions in GIS, Bd. 21. Nr. 2, 10. März 2016, Seiten 191-206, XP055409306, GB, ISSN: 1361-1682, DOI: 10.1111/tgis.12182 ist ein Verfahren bekannt, bei dem Straßenlängen in zwei Karten miteinander verglichen werden.

Der Erfindung liegt das technische Problem zu Grunde, ein Verfahren und eine Vorrichtung zum Vergleichen zweier Karten mit darin hinterlegten Landmarken zu schaffen, bei der eine Qualität einer Karte beurteilt werden kann.

Die technische Aufgabe wird erfindungsgemäß durch ein Verfahren mit den Merkmalen des Patentanspruchs 1, eine Vorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum Vergleichen zweier Karten mit darin hinterlegten Landmarken zur Verfügung gestellt, umfassend die folgenden Schritte: Vergleichen mindestens eines Teilbereichs der ersten Karte mit einem korrespondierenden Teilbereich in der zweiten Karte, wobei eine Ähnlichkeit zwischen dem Teilbereich der ersten Karte und dem korrespondierenden Teilbereich in der zweiten Karte auf Grundlage einer Übereinstimmung zwischen den in beiden Teilbereichen jeweils hinterlegten Landmarken bestimmt wird, und wobei die Ähnlichkeit des verglichenen Teilbereichs in Form eines daraus abgeleiteten Ähnlichkeitswerts ausgedrückt wird.

Ferner wird eine Vorrichtung zum Vergleichen zweier Karten mit darin hinterlegten Landmarken geschaffen, umfassend eine Vergleichseinrichtung, wobei die Vergleichseinrichtung derart ausgebildet ist, mindestens einen Teilbereich einer ersten Karte mit einem korrespondierenden Teilbereich in einer zweiten Karte zu vergleichen und eine Ähnlichkeit zwischen dem Teilbereich der ersten Karte und dem korrespondierenden Teilbereich in der zweiten Karte auf Grundlage einer Übereinstimmung zwischen den in beiden Teilbereichen jeweils hinterlegten Landmarken zu bestimmen, und wobei die Vergleichseinrichtung ferner derart ausgebildet ist, die Ähnlichkeit des verglichenen Teilbereichs in Form eines daraus abgeleiteten Ähnlichkeitswerts auszudrücken.

Die Kernidee der Erfindung ist, zwei Karten durch einen Vergleich der in diesen Karten abgelegten Landmarken auf ihre Ähnlichkeit hin zu bewerten. Dabei kann die erste Karte beispielsweise eine Referenzkarte sein, in der besonders viele oder besonders ausgezeichnete Landmarken abgelegt sind. Die zweite Karte ist dann beispielsweise eine von einem Dienstleister eingekaufte oder eine aktuell mittels einer Umfeldsensorik erfasste und erstellte Karte. Der aus dem Vergleich abgeleitete Ähnlichkeitswert erlaubt eine Abschätzung darüber, wie groß die Anzahl der in beiden Karten vorhandenen und übereinstimmenden Landmarken ist.

Landmarken sollen hier insbesondere Merkmale einer Straßeninfrastruktur sein, beispielsweise Straßenmarkierungen, wie Pfeile, durchgezogene und gestrichelte Linien, Stopplinien, aber auch Pfähle, Pfosten und Verkehrsschilder. Die Landmarken können beispielsweise als Metadaten an den entsprechenden Positionen in den Karten hinterlegt sein.

Es ist aber auch möglich, dass Landmarken erst von einer zusätzlichen Umfelderfassungseinrichtung erfasst, erkannt und klassifiziert werden müssen, beispielsweise über bekannte Objekt- und Mustererkennungsverfahren. Eine solche Umfelderfassungseinrichtung kann beispielsweise ein Laserscanner, eine Ultraschallsensorik und/oder eine Kamera etc. sein.

Ist die erste Karte beispielsweise eine besonders gute Referenzkarte, das heißt sind in dieser besonders viele oder besonders relevante Landmarken abgelegt, so kann eine zweite Karte durch den Vergleich mit der Referenzkarte hinsichtlich ihrer Qualität bewertet werden. Der abgeleitete Ähnlichkeitswert drückt dann die Ähnlichkeit mit der ersten Karte (Referenzkarte) aus, wobei eine hohe Ähnlichkeit gleichbedeutend mit einer hohe Qualität der zweiten Karte ist, eine niedrige Ähnlichkeit hingegen eine niedrige Qualität der zweiten Karte bedeutet.

Es ist vorgesehen, dass die Vorrichtung eine Empfangseinrichtung umfasst, welche derart ausgebildet ist, die erste Karte und/oder die zweite Karte zu empfangen und der Vergleichseinrichtung zur Verfügung zu stellen.

Es ist des Weiteren vorgesehen, dass die Vorrichtung eine Ausgabeeinrichtung umfasst, welche derart ausgebildet ist, den von der Vergleichseinrichtung abgeleiteten Ähnlichkeitswert auszugeben und/oder bereitzustellen. Der abgeleitete Ähnlichkeitswert wird einem Assistenzsystem eines Kraftfahrzeugs bereitgestellt. Auf Grundlage des bereitgestellten Ähnlichkeitswerts trifft das Assistenzsystem dann eine Aussage über die Qualität der ersten und/oder der zweiten Karte und entscheidet, ob eine präzise Navigation und/oder eine automatisierte Fahrt möglich ist oder nicht.

Es kann vorgesehen sein, dass von unterschiedlichen Diensten bereitgestellte Karten miteinander verglichen werden. Ferner ist darüber hinaus ebenfalls möglich, dass beispielsweise zu unterschiedlichen Zeitpunkten von dem gleichen Dienst, beispielsweise einer Umfelderfassungseinrichtung, erstellte Karten in unterschiedlichen Generationen miteinander verglichen werden. Auf diese Weise kann eine Veränderung zwischen den einzelnen Generationen ermittelt werden.

Es ist vorgesehen, dass der Ähnlichkeitswert auf Grundlage einer mittels der Funktionen "Precision" und "Recall" abgeleiteten F1-Kennzahl berechnet wird. Dabei bezeichnet die Funktion "Precision" die Genauigkeit der Übereinstimmung der Landmarken innerhalb des Teilbereichs der ersten Karte und des korrespondierenden Teilbereichs in der zweiten Karte. Die Funktion "Recall" bezeichnet hingegen die Trefferquote. Die Genauigkeit ("Precision") berechnet sich als der Anteil der übereinstimmenden Landmarken, welche relevant sind. Wird beispielsweise die erste Karte als Referenzkarte angesehen und befinden sich in einem verglichenen Teilbereich in dieser Referenzkarte neun Landmarken, so ist die Genauigkeit ("Precision") bei einer Erkennung von sieben Landmarken in dem korrespondierenden Teilbereich in der zweiten Karte, von denen aber nur vier korrekt sind, gleich 4/7. Entsprechend berechnet sich der Wert für die Trefferquote ("Recall") zu 4/9, da insgesamt von neun in der Referenzkarte vorhandenen Landmarken 4 korrekt in der zweiten Karte hinterlegt sind.

Um zu einer einzigen Kennzahl zu gelangen, kombiniert die F1-Kennzahl die Ergebnisse für die Genauigkeit ("Precision") und die Trefferquote ("Recall") über das gewichtete harmonische Mittel:

$$F_1 = 2 \frac{precision \cdot recall}{precision + recall}$$

Eine F1-Kennzahl von 1 bedeutet hierbei, dass die erste Karte und die zweite Karte vollständig deckungsgleich sind, wohingegen ein Wert von 0 bedeutet, dass es überhaupt keine Übereinstimmung oder Ähnlichkeit zwischen der ersten Karte und der zweiten Karte gibt.

In einer weiteren Ausführungsform ist vorgesehen, dass für mindestens einen weiteren Teilbereich in der ersten Karte und einen korrespondierenden weiteren Teilbereich in der zweiten Karte ein weiterer Ähnlichkeitswert bestimmt wird. Dabei wird der weitere Ähnlichkeitswert in gleicher Art und Weise wie der Ähnlichkeitswert bestimmt. Der Vorteil ist, dass mehrere Teilbereiche der beiden Karten miteinander verglichen werden können. Auf diese Weise kann die Qualität einer Karte beispielsweise stichprobenartig an mehreren Positionen ermittelt werden.

In einer Ausführungsform ist ferner vorgesehen, dass der mindestens eine Teilbereich und der mindestens eine weitere Teilbereich jeweils Punkte auf einer zusammenhängenden Trajektorie in der ersten Karte oder der zweiten Karte bilden. Dies ermöglicht das "Abfahren" bestimmter Teststrecken, beispielsweise eines bestimmten Straßenzuges in den beiden Karten. So können beispielsweise Trajektorien gewählt werden, bei denen eine bestimmte Anzahl oder bestimmte Varianten von Landmarken auftreten. Ein Vergleich beziehungsweise eine Qualitätsbestimmung kann dann mittels einer solchen vorgegeben Teststrecke durchgeführt werden.

In einer Ausführungsform ist dabei insbesondere vorgesehen, dass eine Qualitätsbestimmung lediglich auf Grundlage einer fest vorgegebenen Teststrecke in einer Referenzkarte durchgeführt wird. So kann die Qualität einer Karte beispielsweise lediglich auf Grund einer hochgenauen Referenzkarte, welche lediglich die Teststrecke umfassende Teilbereiche umfasst, bestimmt werden. Eine solche begrenzte Referenzkarte kann beispielsweise in einem Kraftfahrzeug hinterlegt sein. Bereitgestellte Karten können dann mittels der begrenzten Referenzkarte hinsichtlich ihrer Qualität überprüft werden. Der Vorteil ist, dass mittels einer solchen Stichprobe eine Aussage über die gesamte bereitgestellte Karte getroffen werden kann, ohne dass große Datenmengen für die Referenzkarte hinterlegt sein müssen.

Insbesondere kann ferner vorgesehen sein, dass der mindestens eine Teilbereich und der mindestens eine weitere Teilbereich überlappen. Dies ermöglicht es, dass Bereiche in den Karten mehrmals auf eine Übereinstimmung hin überprüft werden. Insbesondere kann somit über Teile eines verglichenen Teilbereichs gemittelt werden. Dies ist von Vorteil, wenn beispielsweise Teilbereiche existieren, in denen nur wenige Landmarken vorhanden sind. In diesen wirkt sich eine vorhandene Übereinstimmung oder nicht vorhandene Übereinstimmung einzelner Landmarken besonders stark auf den daraus abgeleiteten Ähnlichkeitswert aus. Durch die Überlappung kann dann ein gemittelter Wert für diesen Teilbereich in der Karte ermittelt werden.

Insbesondere kann in einer Ausführungsform vorgesehen sein, dass die geometrische Form und/oder die Größe des jeweils verglichenen Teilbereichs eingestellt werden kann. Entsprechend kann vorgesehen sein, dass eine Schrittweite zwischen den Teilbereichen, beispielsweise auf einer Trajektorie, eingestellt werden kann. Dabei sind sowohl bei der gewählten Größe als auch bei der gewählten Schrittweite in Abhängigkeit der Ortsauflösung der Karten Werte von Zentimetern bis hin zu Metern oder sogar Kilometer möglich. Entscheidend bei der Wahl der Werte ist dabei beispielsweise ein notwendiger Rechenaufwand beim Vergleichen der beiden Karten oder eine gewünschte Ortsauflösung bei der Bestimmung des Ähnlichkeitswertes.

In einer weiteren Ausführungsform ist vorgesehen, dass ein Überlappungsbereich der ersten Karte und der zweiten Karte vollständig in Teilbereiche zerlegt wird, wobei für jeden der Teilbereiche jeweils ein Ähnlichkeitswert bestimmt wird. Für den Überlappungsbereich, also den geographischen Bereich, für den sowohl Daten in der ersten Karte als auch in der zweiten Karte vorhanden sind, kann somit ein vollständiger Vergleich stattfinden.

Insbesondere kann in einer Ausführungsform vorgesehen sein, dass die zu den Teilbereichen bestimmten Ähnlichkeitswerte in einer Karte an mit den jeweiligen Teilbereichen korrespondierenden Positionen hinterlegt werden. Auf diese Weise kann eine Karte erstellt werden, welche ortsaufgelöst die Ähnlichkeit der Karten beziehungsweise die Qualität einer Karte gegenüber einer Referenzkarte abbildet. Dies ermöglicht beispielsweise festzustellen, in welchen Bereichen eine Karte einen erforderlichen Qualitätsstandard erfüllt und in welchen Bereichen der erforderliche Qualitätsstandard nicht erfüllt ist. In den Bereichen mit nicht ausreichender Qualität kann beispielsweise eine automatisierte Fahrt blockiert werden, da nicht genügend Landmarken zur Lokalisierung zur Verfügung stehen. Die ortsaufgelösten Qualitätsdaten können aber auch dazu dienen, eine Planung für das Erfassen und Hinterlegen weiterer Landmarken in den entsprechenden Bereichen vorzubereiten oder zu unterstützen.

In einer Ausführungsform ist vorgesehen, dass sämtliche für die einzelnen Teilbereiche bestimmten Ähnlichkeitswerte zu einem arithmetischen Mittelwert zusammengefasst werden, wobei der arithmetische Mittelwert anschließend ausgegeben und/oder bereitgestellt wird. Dies hat den Vorteil, dass für die beiden Karten ein einziger Ähnlichkeitswert zur Verfügung gestellt werden kann. Ebenso ermöglicht dies, die Qualität einer Karte durch Vergleich mit einer Referenzkarte durch einen einzigen Wert auszudrücken. Es ist dabei möglich, einen gesamten Überlappungsbereich der beiden Karten zu vergleichen und alle abgeleiteten Ähnlichkeitswerte arithmetisch zu mitteln. Es ist jedoch alternativ auch möglich, dass lediglich Teilbereiche um eine Teststrecke herum betrachtet werden, wobei über diese Teilbereiche arithmetisch gemittelt wird. Dies hat den Vorteil, dass der Rechenaufwand für das Vergleichen drastisch reduziert werden kann. Dabei ist es insbesondere vorteilhaft, wenn eine Teststrecke gewählt wird, welche eine bestimmte Anzahl und/oder bestimmte Varianten von Landmarken enthält, so dass der gemittelte Ähnlichkeitswert eine hohe und repräsentative Aussagekraft über die gesamte Karte besitzt.

Das beschriebene Verfahren und die beschriebene Vorrichtung eignen sich insbesondere zur Verwendung in automatisiert oder halbautomatisiert fahrenden Kraftfahrzeugen, ist aber auch in selbstfahrenden Robotern, Drohnen, Booten oder sonstigen automatisiert oder halbautomatisiert gesteuerten Transportmitteln einsetzbar.

Nachfolgend wird die Erfindung anhand bevorzugter Ausführungsbeispiele unter Bezugnahme auf die Figuren näher erläutert. Hierbei zeigen:

Fig. 1      eine schematische Darstellung einer Ausführungsform einer Vorrichtung zum Vergleichen zweier Karten mit darin hinterlegten Landmarken;

Fig. 2      ein schematisches Ablaufdiagramm des Verfahrens zum Vergleichen zweier Karten mit darin hinterlegten Landmarken;

Fig. 3a      eine schematische Darstellung eines zu einer ersten Karte gehörenden Teilbereichs zur Verdeutlichung der Berechnung des Ähnlichkeitswerts;

Fig. 3b      eine schematische Darstellung eines mit dem in Fig. 3a dargestellten Teilbereich korrespondierenden Teilbereichs in einer zweiten Karte zur Verdeutlichung der Berechnung des Ähnlichkeitswerts;

Fig. 4      eine schematische Darstellung einer typischen Karte mit darin enthaltenen Landmarken zur Verdeutlichung des Verfahrens;

Fig. 5      eine Karte mit einer Trajektorie, in der für einzelne Teilbereiche eine F1-Kennzahl als Ähnlichkeitswert von zwei miteinander verglichenen Karten in Graustufen farbkodiert ist.

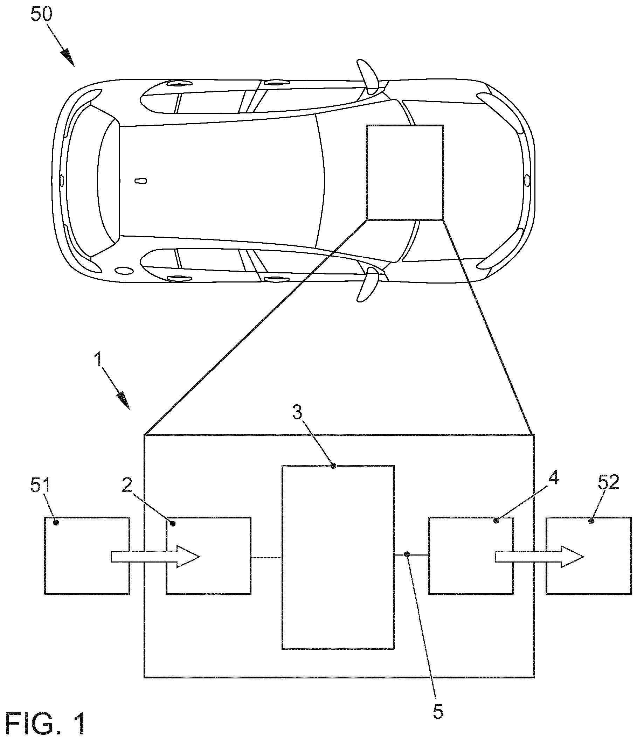

In Fig. 1 ist eine schematische Darstellung einer Vorrichtung 1 zum Vergleichen zweier Karten mit darin hinterlegten Landmarken gezeigt. Die Vorrichtung 1 ist in einem Kraftfahrzeug 50 verbaut, so dass sie beispielsweise zum Ermitteln der Qualität einer bei einer Ortung oder Navigation des Kraftfahrzeugs 50 zu verwendenden Karte verwendet werden kann. Die Vorrichtung 1 umfasst eine Empfangseinrichtung 2, eine Vergleichseinrichtung 3 und eine Ausgabeeinrichtung 4. Die Empfangseinrichtung 2 empfängt die erste Karte und die zweite Karte, beispielsweise von einer Steuerung 51 des Kraftfahrzeugs 50. Die Empfangseinrichtung 2 stellt nachfolgend die erste Karte und die zweite Karte der Vergleichseinrichtung 3 zur Verfügung. Die Vergleichseinrichtung 3 vergleicht die erste Karte mit der zweiten Karte gemäß des beschriebenen Verfahrens und ermittelt einen Ähnlichkeitswert 5. Der Ähnlichkeitswert 5 wird von der Vergleichseinrichtung 3 an die Ausgabeeinrichtung 4 weitergeleitet und von dieser ausgegeben und einem Assistenzsystem 52 des Kraftfahrzeugs 50, beispielsweise einer Navigationseinrichtung, zur Verfügung gestellt. Das Assistenzsystem 52 entscheidet dann auf Grundlage des Ähnlichkeitswerts 5, ob die zu verwendende Karte vorgegebenen Qualitätskriterien genügt oder nicht.

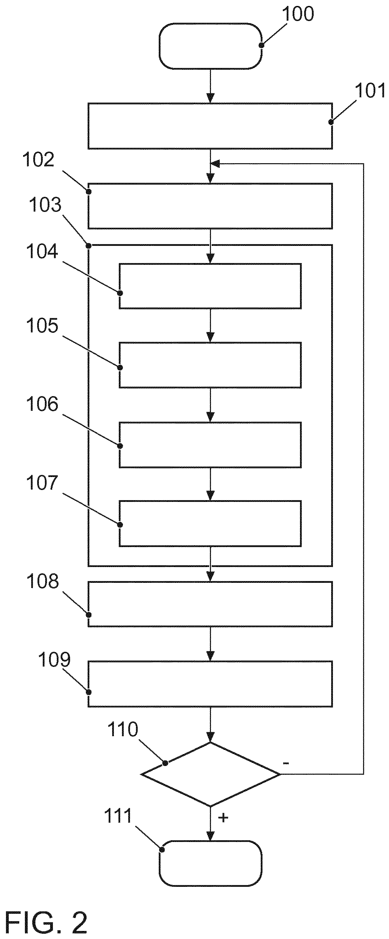

In Fig. 2 ist ein schematisches Ablaufdiagramm einer Ausführungsform des Verfahrens gezeigt. Nach dem Start 100 des Verfahrens, werden die erste Karte und die zweite Karte von einer Empfangseinrichtung empfangen 101. In der ersten Karte und der zweiten Karte werden dann jeweils miteinander korrespondierende Teilbereiche ausgewählt 102. Dabei kann vorgesehen sein, dass vorher überprüft wird, ob die Karten jeweils Teilbereiche abbilden, welche geographisch identische Orte beziehungsweise Ortsbereiche umfassen, das heißt, ob ein Überlappungsbereich existiert oder nicht. Die Auswahl des Teilbereichs und des korrespondierenden Teilbereichs findet insbesondere auf Grundlage einer in den beiden Karten vorgegebenen Trajektorie statt. Die Trajektorie setzt sich dabei idealerweise aus Teilbereichen zusammen, die einander überlappen.

Nach dem Auswählen der Teilbereiche beginnt das Vergleichen 103 des Teilbereichs in der ersten Karte mit dem korrespondierenden Teilbereich in der zweiten Karte. Dazu werden in den ausgewählten Teilbereichen zunächst Landmarken aufgefunden und verglichen 104. Anhand der in den beiden Karten aufgefundenen Landmarken wird die Genauigkeit ("Precision") berechnet 105. Dabei wird eine Karte, beispielsweise die erste Karte, als Referenz verwendet und die andere Karte, beispielsweise die zweite Karte, entsprechend als Testkarte. Auf Grundlage der aufgefundenen Landmarken wird ferner die Trefferquote ("Recall") berechnet 106. Im letzten Verfahrensschritt 107 des Vergleichens 103 wird die F1-Kennzahl aus der Genauigkeit und der Trefferquote berechnet.

Die berechnete F1-Kennzahl wird anschließend ausgeben beziehungsweise bereitgestellt 108. Die bereitgestellte F1-Kennzahl wird dann in einer weiteren ortsaufgelösten Karte an einem mit den Teilbereichen korrespondierenden Ort hinterlegt 109. Es kann ferner auch vorgesehen sein, die bereitgestellte F1-Kennzahl in einer der verglichenen Karten an dem entsprechenden Ort zu hinterlegen.

Im nächsten Verfahrensschritt 110 erfolgt eine Abfrage, ob alle Teilbereiche der vorgegebenen Trajektorie bereits verglichen wurden oder nicht. Wurden noch nicht alle Teilbereiche verglichen, so werden die Verfahrensschritte 102 bis 110 für einen nächstfolgenden Teilbereich auf der Trajektorie wiederholt. Anderenfalls wird das Verfahren beendet 111.

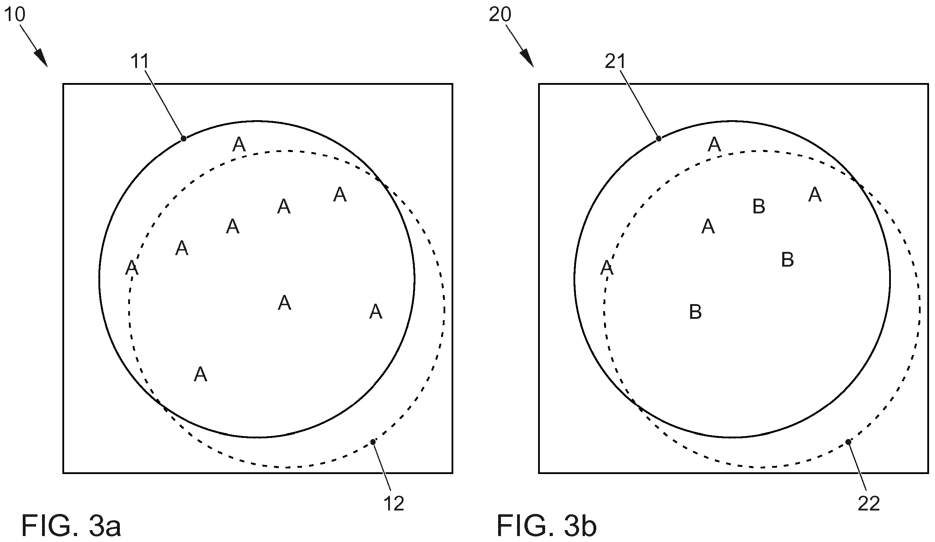

Zur Verdeutlichung der Berechnung des Ähnlichkeitswerts zeigen die Figuren 3a und 3b beispielhaft einen Teilbereich 11 in einer ersten Karte 10 (Fig. 3a) und einen korrespondierenden Teilbereich 21 in einer zweiten Karte 20 (Fig. 3b). Die erste Karte 10 wird hier beispielsweise als Referenzkarte betrachtet. Über die zweite Karte 20 soll hingegen mittels des Verfahrens eine Aussage über deren Qualität in Bezug auf die Referenzkarte getroffen werden.

Beide Teilbereiche 11, 21 weisen jeweils Landmarken A, B auf. Landmarken A, B sollen hier insbesondere Teile einer Straßeninfrastruktur umfassen, beispielsweise Straßenmarkierungen, wie Pfeile, durchgezogene und gestrichelte Linien, Stopplinien, aber auch Pfähle, Pfosten und Verkehrsschilder und dergleichen.

Der Teilbereich 11 in der ersten Karte 10 weist insgesamt neun Landmarken A auf. Der korrespondierende Teilbereich 21 in der zweiten Karte 20 weist hingegen lediglich sieben Landmarken A, B auf. Die Ähnlichkeit der beiden Karten 10, 20 wird nun wie folgt bestimmt. Zuerst wird eine Genauigkeit ("Precision") der zweiten Karte 20 in Bezug auf die erste Karte 10 berechnet. Dazu werden die Landmarken A, B in den beiden Teilbereichen 11, 21 miteinander verglichen. Hier können beispielsweise von den sieben Landmarken A, B im Teilbereich 21 in der zweiten Karte 20 vier Landmarken A jeweils entsprechenden Landmarken A in dem Teilbereich 11 in der ersten Karte 10 zugeordnet werden. Die restlichen Landmarken B in dem Teilbereich 21 der zweiten Karte 20 stimmen hingegen nicht mit den Landmarken A in dem Teilbereich 11 der ersten Karte 10 überein. Die Genauigkeit ("Precision") berechnet sich deshalb zu 4/7, da von sieben vorhandenen Landmarken A, B vier Landmarken A übereinstimmen.

Ferner wird eine Trefferquote ("Recall") berechnet. Von den insgesamt neun Landmarken A in dem Teilbereich 11 der ersten Karte 10 sind vier Landmarken A in dem Teilbereich 21 der zweiten Karte 20 aufgefunden worden. Somit berechnet sich die Trefferquote ("Recall") zu 4/9.

Aus der berechneten Genauigkeit ("Precision") und der Trefferquote ("Recall") lässt sich die F1-Kennzahl für dieses Beispiel berechnen zu:

$$F_1 = 2 \frac{\frac{4}{7} \cdot \frac{4}{9}}{\frac{4}{7} + \frac{4}{9}} = \frac{1}{2}$$

Die Ähnlichkeit zwischen den beiden Karten 10, 20 lässt sich also über den Vergleich der Landmarken A, B in den beiden Teilbereichen über die F1-Kennzahl als 1/2 abschätzten.

Es sei zu diesem Beispiel noch angemerkt, dass man zu dem gleichen Ergebnis kommt, wenn die zweite Karte 20 als Referenzkarte betrachtet wird und die Qualität der ersten Karte 10 beurteilt werden soll. Die berechneten Werte für die Genauigkeit und die Trefferquote sind dann vertauscht, die F1-Kennzahl bleibt hingegen gleich.

Ist der Ähnlichkeitswert für den Teilbereich 11 in der ersten Karte 10 und dem korrespondierenden Teilbereich 21 in der zweiten Karte 20 bestimmt, so kann das Verfahren für einen weiteren Teilbereich 12 in der ersten Karte 10 und einen korrespondierenden weiteren Teilbereich 22 in der zweiten Karte 20 erneut durchgeführt werden. Die weiteren Teilbereiche 12, 22 sind hierbei um eine bestimmte Schrittweite gegenüber den Teilbereichen 11, 21 verschoben. Insbesondere ist es auf diese Weise möglich, eine aus mehreren Teilbereichen bestehende Trajektorie in der Karte "abzufahren".

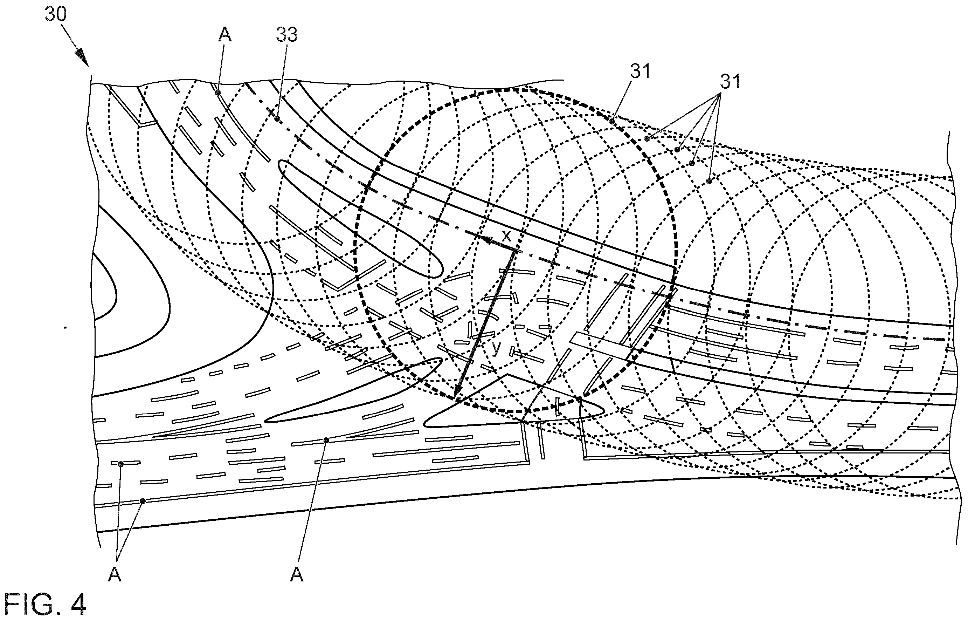

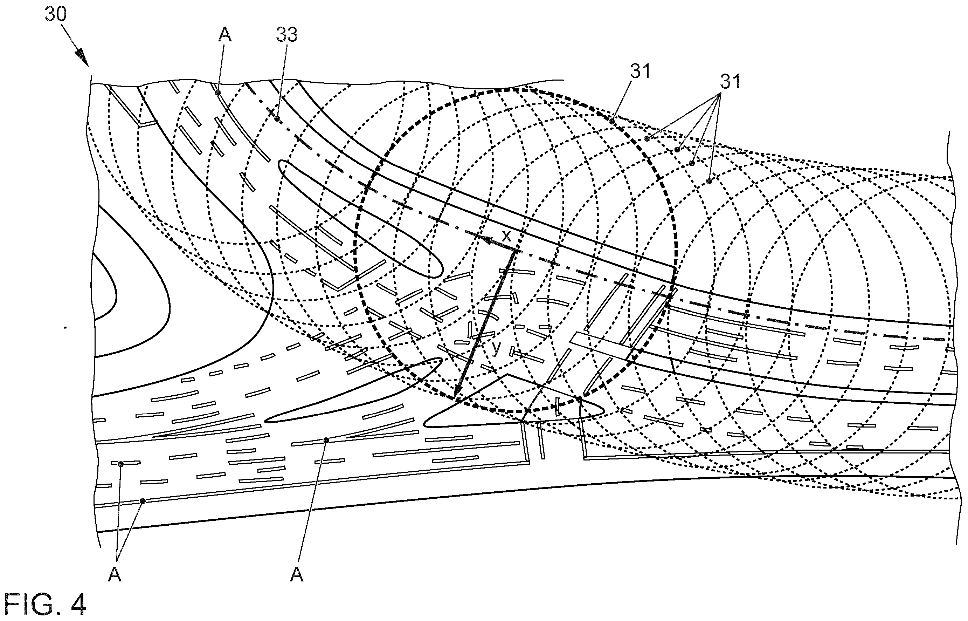

Zur Verdeutlichung des Verfahrens ist in Fig. 4 eine schematische Darstellung einer Karte 30 mit darin enthaltenen Landmarken A gezeigt. Hierbei sind nur einige Landmarken A beispielhaft mit einem eigenen Bezugszeichen versehen. Ferner ist eine beispielhafte Aufteilung der Karte 30 in verschiedene Teilbereiche 31 dargestellt. Auch hier wurde der Übersichtlichkeit halber nicht jeder Teilbereich 31 mit einem eigenen Bezugszeichen versehen. Die Teilbereiche 31 sind dabei kreisförmig mit einem Radius y und einer konstanten Schrittweite x einander überlappend entlang einer Trajektorie 33 gewählt. Für jeden dieser Teilbereiche 31 wird das Verfahren entsprechend (für die Karte 30 und korrespondierende Teilbereiche in einer zweiten Karte) durchgeführt. Es ist hierbei möglich, die geometrische Form, den Radius y und die Schrittweite x nahezu frei den entsprechenden Gegebenheiten anzupassen. Beispielsweise kann durch eine kleine Schrittweite x, aber ein im Vergleich hierzu relativ großen Radius y, eine Mittelung erreicht werden, da Landmarken A in verschiedenen, aber benachbarten, Teilbereichen 31 jeweils mehrmals berücksichtigt werden. Ist eine feinere Auflösung ohne Mittelung gewünscht, so können die Werte entsprechend angepasst werden.

Insbesondere kann vorgesehen sein, für den Vergleich zweier Karten eine vorgegebene Trajektorie 33 entlang einer besonders gut geeigneten Teststrecke zu wählen. Dies kann beispielsweise eine Teststrecke sein, auf der alle vorgesehenen Landmarken A mindestens einmal vorkommen oder eine besonders hohe Dichte von Landmarken A vorherrscht, so dass sich die Genauigkeit und die Trefferquote besonders genau bestimmen lassen. Dabei sollte die Teststrecke derart gewählt werden, dass diese nach Möglichkeit eine repräsentative Aussage über die gesamte Karte erlaubt.

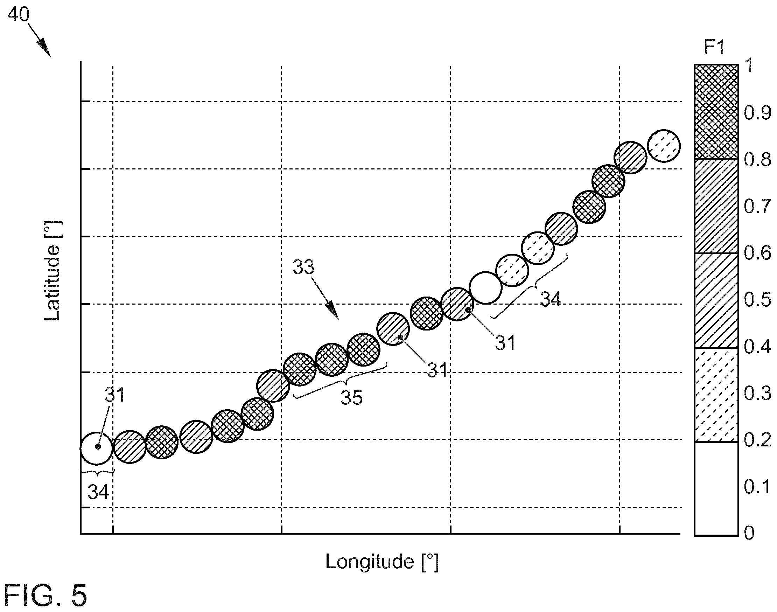

Die für einzelne Teilbereiche berechneten F1-Kennzahlen können jeweils den entsprechenden Positionen der Teilbereiche zugeordnet werden. Ein Beispiel für eine solche Zuordnung ist schematisch in Fig. 5 gezeigt. Hier wurde einzelnen auf einer Trajektorie 33 liegenden Teilbereichen 31 jeweils die für den Teilbereich 31 berechnete F1-Kennzahl zugeordnet und anschließend daraus eine ortsaufgelöste und farbkodierte (in Schattierungen) Karte 40 erstellt.

Durch die Karte 40 wird es möglich, ortsaufgelöst eine Aussage über die Ähnlichkeit von zwei miteinander verglichenen Karten zu treffen. So existieren zum Beispiel Abschnitte 34 auf der Trajektorie 33, welche eine sehr geringe Ähnlichkeit (F1 klein) aufweisen, und Abschnitte 35, in denen die Ähnlichkeit hoch (F1 groß) ist. Dies ermöglicht es ferner, eine Karte hinsichtlich ihrer Qualität zu beurteilen, wenn beispielsweise eine bekannte Karte sehr hoher Qualität als Referenzkarte verwendet wurde. Die gezeigte Abstufung der Werte für die F1-Kennzahl ist hierbei lediglich beispielhaft gewählt und kann sowohl feiner als auch gröber ausgebildet sein.

Das Verfahren ermöglicht es, vor einem Ausführen einer automatisierten Fahrt zu überprüfen, ob die Qualität der zu verwendenden Karte in einem zu durchfahrenden Teilbereich ausreichend ist oder nicht. Des Weiteren ermöglicht das Verfahren einen effizienten Kartenqualitätsvergleich eventueller Karten unterschiedlicher Hersteller. Insbesondere wird auch die inkrementelle, qualitätsorientierte Kartenaktualisierung ermöglicht.

**Bezugszeichenliste**

| | |
|---|---|
| 1 | Vorrichtung |
| 2 | Empfangseinrichtung |
| 3 | Vergleichseinrichtung |
| 4 | Ausgabeeinrichtung |
| 5 | Ähnlichkeitswert |
| 10 | erste Karte |
| 11 | Teilbereich |
| 12 | weiterer Teilbereich |
| 20 | zweite Karte |
| 21 | Teilbereich |
| 22 | weiterer Teilbereich |
| 30 | Karte |
| 31 | Teilbereich |

| 33 | Trajektorie |
|---|---|
| 34 | Abschnitt |
| 35 | Abschnitt |
| 40 | Karte |
| 50 | Kraftfahrzeug |
| 51 | Steuerung |
| 52 | Assistenzsystem |
| 100-111 | Verfahrensschritte |
| A | Landmarke |
| B | Landmarke |
| x | Schrittweite |
| y | Radius |

**Patentansprüche**

1. Verfahren zum Vergleichen zweier Karten (10, 20) mit darin hinterlegten Landmarken (A, B), umfassend Merkmale einer Straßeninfrastruktur, wobei die folgenden Schritte durch eine Vorrichtung (1) eines Fahrzeugs (50) ausgeführt werden, die eine Empfangseinrichtung (2), eine Vergleichseinrichtung (3) und eine Ausgabeeinrichtung (4) aufweist:

   - Empfangen (101) von ersten und zweiten Karten (10,11) durch die Empfangseinrichtung (2);
   - Auswählen (102) mindestens eines jeweils miteinander korrespondierenden Teilbereichs (11) der ersten Karte (10) und der zweiten Karte (11),
   - Vergleichen (103) des mindestens einen Teilbereichs (11) der ersten Karte (10) mit dem korrespondierenden Teilbereich (21) in der zweiten Karte (20) mittels der Vergleichseinrichtung (3),

     wobei eine Ähnlichkeit zwischen dem Teilbereich (11) der ersten Karte (10) und dem korrespondierenden Teilbereich (21) in der zweiten Karte (20) auf Grundlage einer Übereinstimmung zwischen den in beiden Teilbereichen (11, 21) jeweils hinterlegten Landmarken (A, B) bestimmt wird, und
     wobei die Ähnlichkeit des verglichenen Teilbereichs (11, 21) in Form eines daraus abgeleiteten Ähnlichkeitswerts (5) ausgedrückt wird, wobei der Ähnlichkeitswert als eine F1-Kennzahl als Kennzahl der Übereinstimmung berechnet wird,

   - Ausgeben (108) und/oder Bereitstellen (108) des Ähnlichkeitswerts (5) an ein Assistenzsystem (52) eines Fahrzeuges (50), welches auf Grundlage des bereitgestellten Ähnlichkeitswerts (5) eine Aussage über die Qualität der ersten Karte (10) und/oder der zweiten Karte (20) trifft und entscheidet, ob eine präzise Navigation und/oder eine automatisierte Fahrt möglich ist oder nicht;

   und wobei das Vergleichen (103) folgende durch die Vergleichseinrichtung (3) ausgeführte Teilschritte umfasst:

   - Auffinden (104) von Landmarken (A,B) in den miteinander korrespondierenden Teilbereichen (11,21) der ersten und zweiten Karte (10,20),
   - Berechnen (105) einer Genauigkeit ("Precision") als das Verhältnis der Anzahl der Landmarken (A,B) im Teilbereich (21) der zweiten Karte (20), die einer Landmarke (A,B) in der ersten Karte (10) zugeordnet werden können, zu der Anzahl der Landmarken (A,B) im Teilbereich (21) der zweiten Karte (20),
   - Berechnen (106) einer Trefferquote ("Recall") als das Verhältnis der Anzahl der Landmarken (A,B) im Teilbereich (11) der ersten Karte (10), die einer Landmarke (A,B) in der zweiten Karte (20) zugeordnet werden können, zu der Anzahl der Landmarken (A,B) im Teilbereich (11) der ersten Karte (10),
   - Berechnen (107) der F1-Kennzahl gemäß der Formel:

   $$F1 = 2 * Precision * Recall/(Precision + Recall).$$

2. Verfahren nach einem der vorangegangenen Ansprüche, **dadurch gekennzeichnet, dass** für mindestens einen weiteren Teilbereich (12) in der ersten Karte (10) und einen korrespondierenden weiteren Teilbereich (22) in der zweiten Karte (20) ein weiterer Ähnlichkeitswert bestimmt wird.

3. Verfahren nach Anspruch 2, **dadurch gekennzeichnet, dass** der mindestens eine Teilbereich (11, 21) und der mindestens eine weitere Teilbereich (12, 22) jeweils Punkte auf einer zusammenhängenden Trajektorie (33) in der ersten Karte (10) oder der zweiten Karte (20) bilden.

4. Verfahren nach Anspruch 2 oder 3, **dadurch gekennzeichnet, dass** der mindestens eine Teilbereich (11, 21) und der mindestens eine weitere Teilbereich (12, 22) überlappen.

5. Verfahren nach einem der vorangegangenen Ansprüche, **dadurch gekennzeichnet, dass** ein Überlappungsbereich der ersten Karte (10) und der zweiten Karte (20) vollständig in Teilbereiche (11, 21, 31) zerlegt wird, wobei für jeden der Teilbereiche (11, 21, 31) jeweils ein Ähnlichkeitswert (5) bestimmt wird.

6. Verfahren nach einem der vorangegangenen Ansprüche, **dadurch gekennzeichnet, dass** die zu den Teilbereichen (11, 21, 31) bestimmten Ähnlichkeitswerte (5) in einer Karte (40) an mit den jeweiligen Teilbereichen (11, 21, 31) korrespondierenden Positionen hinterlegt werden.

7. Vorrichtung (1) zum Vergleichen zweier Karten (10, 20) mit darin hinterlegten Landmarken (A, B), umfassend Merkmale einer Straßeninfrastruktur, umfassend:

  eine Empfangseinrichtung (2),
  eine Vergleichseinrichtung (3),
  eine Ausgabeeinrichtung (4),
  wobei Vorrichtung (1) derart ausgebildet ist, die folgenden Schritte auszuführen:

    - Empfangen (101) von ersten und zweiten Karten (10,11) durch die Empfangseinrichtung (2);
    - Auswählen (102) mindestens eines jeweils miteinander korrespondierenden Teilbereichs (11) der ersten Karte (10) und der zweiten Karte (11),
    - Vergleichen (103) des mindestens einen Teilbereichs (11) der ersten Karte (10) mit dem korrespondierenden Teilbereich (21) in der zweiten Karte (20) mittels der Vergleichseinrichtung (3),

      wobei eine Ähnlichkeit zwischen dem Teilbereich (11) der ersten Karte (10) und dem korrespondierenden Teilbereich (21) in der zweiten Karte (20) auf Grundlage einer Übereinstimmung zwischen den in beiden Teilbereichen (11, 21) jeweils hinterlegten Landmarken (A, B) bestimmt wird, und
      wobei die Ähnlichkeit des verglichenen Teilbereichs (11, 21) in Form eines daraus abgeleiteten Ähnlichkeitswerts (5) ausgedrückt wird, wobei der Ähnlichkeitswert als eine F1-Kennzahl als Kennzahl der Übereinstimmung berechnet wird,

    - Ausgeben (108) und/oder Bereitstellen (108) des Ähnlichkeitswerts (5) an ein Assistenzsystem (52) eines Fahrzeuges (50), sodass das Assistenzsystem (52) auf Grundlage des bereitgestellten Ähnlichkeitswerts (5) eine Aussage über die Qualität der ersten Karte (10) und/oder der zweiten Karte (20) treffen und entscheiden kann, ob eine präzise Navigation und/oder eine automatisierte Fahrt möglich ist oder nicht;

  und wobei das Vergleichen (103) folgende durch die Vergleichseinrichtung (3) ausgeführte Teilschritte umfasst:

    - Auffinden (104) von Landmarken (A,B) in den miteinander korrespondierenden Teilbereichen (11,21) der ersten und zweiten Karte (10,20),
    - Berechnen (105) einer Genauigkeit ("Precision") als das Verhältnis der Anzahl der Landmarken (A,B) im Teilbereich (21) der zweiten Karte (20), die einer Landmarke (A,B) in der ersten Karte (10) zugeordnet werden können, zu der Anzahl der Landmarken (A,B) im Teilbereich (21) der zweiten Karte (20),
    - Berechnen (106) einer Trefferquote ("Recall") als das Verhältnis der Anzahl der Landmarken (A,B) im Teilbereich (11) der ersten Karte (10), die einer Landmarke (A,B) in der zweiten Karte (20) zugeordnet werden können, zu der Anzahl der Landmarken (A,B) im Teilbereich (11) der ersten Karte (10),
    - Berechnen (107) der F1-Kennzahl gemäß der Formel:

$$F1 = 2 * Precision * Recall/(Precision + Recall).$$

## Claims

1. Method for comparing two maps (10, 20) with landmarks (A, B) stored therein, comprising features of a road infrastructure, wherein the following steps are carried out by an apparatus (1) of a vehicle (50), which has a receiving device (2), a comparison device (3) and an output device (4):

- receiving (101) first and second maps (10, 11) by means of the receiving device (2);
- selecting (102) at least one portion (11) of the first map (10) and of the second map (11), which portions in each case correspond to one another,
- comparing (103) the at least one portion (11) of the first map (10) with the corresponding portion (21) in the second map (20) by means of the comparison device (3),

wherein a similarity between the portion (11) of the first map (10) and the corresponding portion (21) in the second map (20) is determined on the basis of a match between the landmarks (A, B) stored in each of the two portions (11, 21), and

wherein the similarity of the compared portion (11, 21) is expressed in the form of a similarity value (5) derived therefrom, wherein the similarity value is calculated as an F1 score as a score for the match,

- outputting (108) and/or providing (108) the similarity value (5) to an assistance system (52) of a vehicle (50), which, on the basis of the similarity value (5) provided, makes a statement about the quality of the first map (10) and/or the second map (20) and decides whether precise navigation and/or automated driving is possible or not;

and wherein the comparison (103) comprises the following substeps carried out by the comparison device (3):

- finding (104) landmarks (A, B) in the mutually corresponding portions (11, 21) of the first and the second map (10, 20),
- calculating (105) an accuracy ("precision") as the ratio of the number of landmarks (A, B) in the portion (21) of the second map (20) that can be assigned to a landmark (A, B) in the first map (10), to the number of landmarks (A, B) in the portion (21) of the second map (20),
- calculating (106) a hit rate ("recall") as the ratio of the number of landmarks (A, B) in the portion (11) of the first map (10) that can be assigned to a landmark (A, B) in the second map (20), to the number of landmarks (A, B) in the portion (11) of the first map (10),
- calculating (107) the F1 score according to the formula:

$$F1 = 2 * \text{precision} * \text{recall}/(\text{precision} + \text{recall}).$$

2. Method according to any of the preceding claims, **characterized in that** a further similarity value is determined for at least one further portion (12) in the first map (10) and a corresponding further portion (22) in the second map (20).

3. Method according to claim 2, **characterized in that** the at least one portion (11, 21) and the at least one further portion (12, 22) each form points on a continuous trajectory (33) in the first map (10) or the second map (20).

4. Method according to claim 2 or 3, **characterized in that** the at least one portion (11, 21) and the at least one further portion (12, 22) overlap.

5. Method according to any of the preceding claims, **characterized in that** an overlapping region of the first map (10) and the second map (20) is completely broken down into portions (11, 21, 31), a similarity value (5) being determined for each of the portions (11, 21, 31).

6. Method according to any of the preceding claims, **characterized in that** the similarity values (5) determined for the portions (11, 21, 31) are stored in a map (40) at positions corresponding to the respective portions (11, 21, 31).

7. Apparatus (1) for comparing two maps (10, 20) with landmarks (A, B) stored therein, comprising features of a road infrastructure, comprising: a receiving device (2),

a comparison device (3),
an output device (4),
wherein the apparatus (1) is designed to carry out the following steps:

- receiving (101) first and second maps (10, 11) by means of the receiving device (2);

- selecting (102) at least one portion (11) of the first map (10) and of the second map (11), which portions in each case correspond to one another,
- comparing (103) the at least one portion (11) of the first map (10) with the corresponding portion (21) in the second map (20) by means of the comparison device (3),

wherein a similarity between the portion (11) of the first map (10) and the corresponding portion (21) in the second map (20) is determined on the basis of a match between the landmarks (A, B) stored in each of the two portions (11, 21), and
wherein the similarity of the compared portion (11, 21) is expressed in the form of a similarity value (5) derived therefrom, wherein the similarity value is calculated as an F1 score as a score for the match,

- outputting (108) and/or providing (108) the similarity value (5) to an assistance system (52) of a vehicle (50),so that the assistance system (52), on the basis of the similarity value (5) provided, can make a statement about the quality of the first map (10) and/or the second map (20) and can decide whether precise navigation and/or automated driving is possible or not;

and wherein the comparison (103) comprises the following substeps carried out by the comparison device (3):

- finding (104) landmarks (A, B) in the mutually corresponding portions (11, 21) of the first and the second map (10, 20),
- calculating (105) an accuracy ("precision") as the ratio of the number of landmarks (A, B) in the portion (21) of the second map (20) that can be assigned to a landmark (A, B) in the first map (10), to the number of landmarks (A, B) in the portion (21) of the second map (20),
- calculating (106) a hit rate ("recall") as the ratio of the number of landmarks (A, B) in the portion (11) of the first map (10) that can be assigned to a landmark (A, B) in the second map (20), to the number of landmarks (A, B) in the portion (11) of the first map (10),
- calculating (107) the F1 score according to the formula:

$$F1 = 2 * precision * recall/(precision + recall).$$

## Revendications

1. Procédé de comparaison de deux cartes (10, 20) comportant des points de repère (A, B) qui y sont enregistrés, comprenant des caractéristiques d'une infrastructure routière, dans lequel les étapes suivantes sont exécutées par un dispositif (1) d'un véhicule (50), qui présente un dispositif de réception (2), un dispositif de comparaison (3) et un dispositif de sortie (4) :

- réception (101) de première et seconde cartes (10, 11) par le dispositif de réception (2) ;
- sélection (102) d'au moins une zone partielle (11) de la première carte (10) et de la seconde carte (11) qui correspondent respectivement l'une à l'autre,
- comparaison (103) de l'au moins une zone partielle (11) de la première carte (10) avec la zone partielle (21) correspondante dans la seconde carte (20) au moyen du dispositif de comparaison (3),

dans lequel une similitude entre la zone partielle (11) de la première carte (10) et la zone partielle (21) correspondante dans la seconde carte (20) est déterminée sur la base d'une concordance entre les points de repère (A, B) respectivement enregistrés dans les deux zones partielles (11, 21), et
dans lequel la similitude de la zone partielle (11, 21) comparée est exprimée sous la forme d'une valeur de similitude (5) dérivée de celle-ci, dans lequel la valeur de similitude est calculée sous la forme d'un indice F1 en tant qu'indice de concordance,

- émission (108) et/ou mise à disposition (108) de la valeur de similitude (5) à un système d'assistance (52) d'un véhicule (50) qui, sur la base de la valeur de similitude (5) mise à disposition, fait une déclaration sur la qualité de la première carte (10) et/ou de la seconde carte (20) et décide si une navigation précise et/ou une conduite automatisée sont possibles ou non ;

et dans lequel la comparaison (103) comprend les étapes partielles suivantes exécutées par le dispositif de comparaison (3) :

- recherche (104) de points de repère (A, B) dans les zones partielles (11, 21) de la première et de la seconde carte (10, 20) qui se correspondent entre elles,
- calcul (105) d'une précision (« Precision ») comme le rapport entre le nombre de points de repère (A, B) dans la zone partielle (21) de la seconde carte (20) qui peuvent être associés à un point de repère (A, B) dans la première carte (10) et le nombre de points de repère (A, B) dans la zone partielle (21) de la seconde carte (20),
- calcul (106) d'un taux de réussite (« Recall ») comme le rapport entre le nombre de points de repère (A, B) dans la zone partielle (11) de la première carte (10) qui peuvent être associés à un point de repère (A, B) dans la seconde carte (20) et le nombre de points de repère (A, B) dans la zone partielle (11) de la première carte (10),
- calcul (107) de l'indice F1 selon la formule :

$$F1 = 2 * Precision * Recall/(Precision + Recall).$$

2. Procédé selon l'une des revendications précédentes, **caractérisé en ce qu'**une autre valeur de similitude est déterminée pour au moins une autre zone partielle (12) dans la première carte (10) et une autre zone partielle (22) correspondante dans la seconde carte (20).

3. Procédé selon la revendication 2, **caractérisé en ce que** l'au moins une zone partielle (11, 21) et l'au moins une autre zone partielle (12, 22) constituent respectivement des points sur une trajectoire cohérente (33) dans la première carte (10) ou la seconde carte (20).

4. Procédé selon la revendication 2 ou 3, **caractérisé en ce que** l'au moins une zone partielle (11, 21) et l'au moins une autre zone partielle (12, 22) se chevauchent.

5. Procédé selon l'une des revendications précédentes, **caractérisé en ce qu'**une zone de chevauchement de la première carte (10) et de la seconde carte (20) est entièrement décomposée en zones partielles (11, 21, 31), dans lequel une valeur de similitude (5) est respectivement déterminée pour chacune des zones partielles (11, 21, 31).

6. Procédé selon l'une des revendications précédentes, **caractérisé en ce que** les valeurs de similitude (5) déterminées pour les zones partielles (11, 21, 31) sont enregistrées dans une carte (40) à des positions correspondant aux zones partielles (11, 21, 31) respectives.

7. Dispositif (1) de comparaison de deux cartes (10, 20) comportant des points de repère (A, B) qui y sont enregistrés, comprenant des caractéristiques d'une infrastructure routière, comprenant : un dispositif de réception (2),

un dispositif de comparaison (3),
un dispositif d'émission (4),
dans lequel le dispositif (1) est conçu pour exécuter les étapes suivantes :

- réception (101) de première et seconde cartes (10, 11) par le dispositif de réception (2) ;
- sélection (102) d'au moins une zone partielle (11) de la première carte (10) et de la seconde carte (11) qui correspondent respectivement l'une à l'autre,
- comparaison (103) de l'au moins une zone partielle (11) de la première carte (10) avec la zone partielle (21) correspondante dans la seconde carte (20) au moyen du dispositif de comparaison (3),

dans lequel une similitude entre la zone partielle (11) de la première carte (10) et la zone partielle (21) correspondante dans la seconde carte (20) est déterminée sur la base d'une concordance entre les points de repère (A, B) respectivement enregistrés dans les deux zones partielles (11, 21), et dans lequel la similitude de la zone partielle (11, 21) comparée est exprimée sous la forme d'une valeur de similitude (5) dérivée de celle-ci, dans lequel la valeur de similitude est calculée sous la forme d'un indice F1 en tant qu'indice de concordance,

- émission (108) et/ou mise à disposition (108) de la valeur de similitude (5) à un système d'assistance (52) d'un véhicule (50), de telle sorte que le système d'assistance (52), sur la base de la valeur de similitude (5) mise à disposition, peut faire une déclaration sur la qualité de la première carte (10) et/ou de la seconde carte (20) et décider si une navigation précise et/ou une conduite automatisée sont possibles ou non ;

et dans lequel la comparaison (103) comprend les étapes partielles suivantes exécutées par le dispositif de comparaison (3) :

- recherche (104) de points de repère (A, B) dans les zones partielles (11, 21) de la première et de la seconde carte (10, 20) qui se correspondent entre elles,
- calcul (105) d'une précision (« Precision ») comme le rapport entre le nombre de points de repère (A, B) dans la zone partielle (21) de la seconde carte (20) qui peuvent être associés à un point de repère (A, B) dans la première carte (10) et le nombre de points de repère (A, B) dans la zone partielle (21) de la seconde carte (20),
- calcul (106) d'un taux de réussite (« Recall ») comme le rapport entre le nombre de points de repère (A, B) dans la zone partielle (11) de la première carte (10) qui peuvent être associés à un point de repère (A, B) dans la seconde carte (20) et le nombre de points de repère (A, B) dans la zone partielle (11) de la première carte (10),
- calcul (107) de l'indice F1 selon la formule :

$$F1 = 2 * Precision * Recall/(Precision + Recall).$$

**FIG. 1**

FIG. 2

FIG. 3a

FIG. 3b

EP 3 239 903 B1

FIG. 4

EP 3 239 903 B1

FIG. 5

Longitude [°]

Latitude [°]

F1

1
0.9
0.8
0.7
0.6
0.5
0.4
0.3
0.2
0.1
0

40

31

33

34

35

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARIA ANTONIA BROVELLI et al.** Towards an Automated Comparison of OpenStreetMap with Authoritative Road Datasets''. *Transactions in GIS*, 10 March 2016, vol. 21 (2), ISSN 1361-1682, 191-206